# EUROPEAN PATENT APPLICATION

(11) **EP 1 190 771 A1**
(43) Date of publication of application: **27.03.2002**
(21) Application number: 01306461.3
(22) Date of filing: 27.07.2001
(51) Int. Cl.: B01L 3/00

(54) **Quality control method and apparatus for automated analyses of biological matter**

(30) Priority: 30.08.2000 US 651152
(71) Applicant: Wardlaw Partners LP, Lyme, CT 06371 (US); Levine, Robert Aaron, Guilford, Connecticut 06437 (US)
(72) Inventor: Wardlaw, Stephen C., Lyme, Connecticut 06371 (US)
(74) Representative: Leckey, David Herbert

(57) **Abstract**

An apparatus for analyzing a biological sample is provided that includes a container (10) for holding the biological sample, an identity tag (12) attached to the container (10), and an analytical device (16) for analyzing the biological sample that includes a reader for authenticating the identity tag (12). According to another aspect of the present invention, a method for analyzing a biological sample is provided that includes the steps of: (a) providing a container (10) for holding the biological sample that includes an identity tag (12); (b) providing an analytical device (16) for analyzing the biological sample that includes a reader for authenticating the identity tag (12); (c) authenticating the origin of the container using the identity tag (12) and the reader; and (d) producing information indicating the authenticity of the container (10).

## Description

The present invention relates to biologic analysis methods and apparatus in general, and to quality control methods and apparatus for automated analyses of biologic matter in particular.

Traditionally, clinical analyses on biologic matter were performed manually by skilled technicians who used a variety of controls and standards to ensure the quality of the analytical results they produced. Analytical instruments capable of performing automated analytical procedures (e.g. measuring clinically useful analyates such as serum chemistries, immunologic reactions, hematologic information, etc.) eventually became available. These automated analytical instruments typically dispensed bulk reagents into non-disposable analytical chambers. A number of different bulk formulations of the test reagents could be used with these instruments, regardless of whether the instrument manufacturer made the reagent or not. Quality control was accomplished by a variety of measures, including the performance of standard curves, the running of multiple controls, and the like. These quality control measures were adequate because the tests were performed on the same reagents using the same methods as those used to create the standard curves and controls. However, this is not the case with many newer analytical instruments.

Many types of modern analytical instruments employ a unitized, completely disposable container that includes all of the reagents and reaction chambers used in the test. Quality control is a significant issue for these type containers. For example, few modern disposable containers include mechanisms for creating a standard curve or a control using the same reagents that are included in the container. In addition, the physical characteristics of a container's analysis chamber can vary considerably due to manufacturing tolerances. Analytical results produced using such a disposable container can, therefore, vary significantly and undesirably influence the reliability of those analytical results. Reliability can, of course, be achieved by using reagents and analysis chambers manufactured to very tight tolerances. In fact, companies who manufacture analytical instruments will often also manufacture the disposable containers and encourage users to use their brand container with their analytical instrument, as a way of increasing the reliability of the analysis. In many instances, however, third party companies will produce aftermarket disposable containers and market those containers for use in one or more analytical devices. Aftermarket disposable containers are sometimes manufactured to less discriminating standards. Consequently, an analysis performed on a name-brand analytical device might yield unreliable data not because of the analytical device, but rather because of the aftermarket container. In such a case, it may not be readily apparent which aspect of the analytical system is compromising the data. Hence, the reputation of an analytical device and its manufacturer, and even the reputation of the laboratory performing the tests, can become suspect through no fault of their own. More important, however, is the chance that bad clinical data might unknowingly be used in the treatment of a patient.

What is needed, therefore, is a quality control method and apparatus for automated analyses of biologic matter that can provide high quality, reliable analytical data, one that will protect the reputation of the laboratory and the instrument manufacturer, and one that will facilitate the highest quality patient care possible.

It is, therefore, an object of the present invention to provide a quality control method and apparatus for automated analyses of biologic matter that produces analytical data of higher reliability than that produced using current analytical methods and/or apparatus of which we are aware.

According to one aspect of the present invention, an apparatus for analyzing a biologic sample is provided that includes a container for holding the biologic sample, an identity tag attached to the container, and an analytical device for analyzing the biologic sample that includes a reader for authenticating the identity tag.

According to another aspect of the present invention, a method for analyzing a biologic sample is provided that includes the steps of: (a) providing a container for holding the biologic sample that includes an identity tag; (b) providing an analytical device for analyzing the biologic sample that includes a reader for authenticating the identity tag; (c) authenticating the origin of the container using the identity tag and the reader; and (d) producing information indicating the authenticity of the container.

One of the advantages of the present method and apparatus is that they facilitate consistent production of high quality, reliable analytical data. As stated above, the present apparatus and method provide a means by which the quality of a disposable container can be assessed without physically analyzing the container itself before each analysis. As a result, there is no need for an analytical device to include the apparatus necessary to perform that quality control analysis. Nor is there any need to perform a quality control analysis on every container used. Each analysis can consequently be performed in less time and less expensively than would be otherwise possible.

The ability of the present method and apparatus to produce high quality, reliable analytical results also helps to protect the reputation of the laboratory and the instrument manufacturer. In the event a patient or caregiver receives compromised clinical data, it is unlikely they will have the ability to readily determine which aspect or aspects of the analytical procedure is at fault and will therefore assume the entire analytical procedure is at fault. There is, accordingly, considerable advantage in decreasing any potential source of error in an analytical procedure. The present method and apparatus provide an indication to an operator regarding the authenticity of a container, and therefore the quality of that container.

These and other objects, features and advantages of at least a preferred embodiment of the present invention will become apparent in light of the detailed description of the present invention, described with reference to the accompanying drawings, in which:
FIG. 1 is a diagrammatic view of a disposable container for holding biologic matter.
FIG.2 is a diagrammatic view of an analytical device and a disposable container for holding biologic matter.

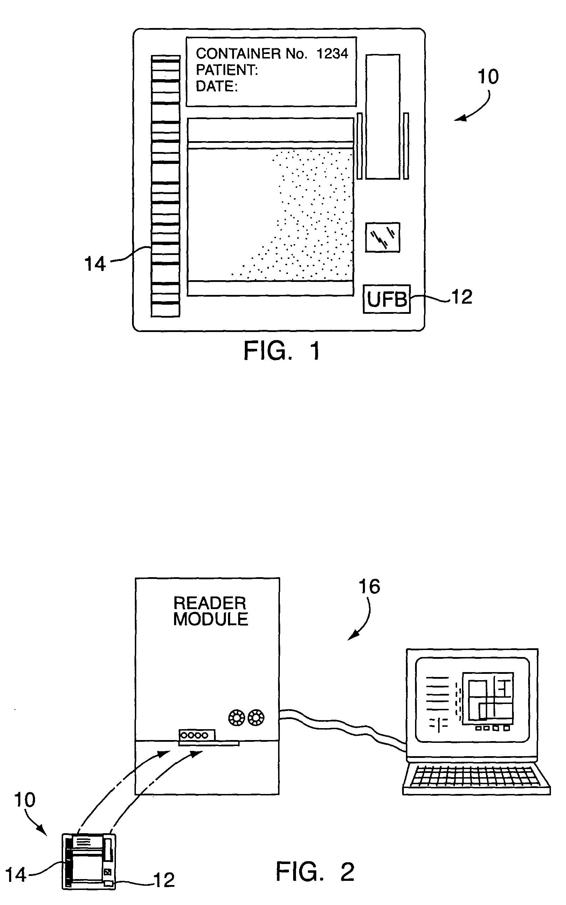

Referring to FIG. 1, a method and apparatus for quality control for automated analyses of biologic matter includes the provision of a container 10 for holding biologic matter for analysis that includes an identity tag 12 attached to the container 10. An identity tag 12 that is formed integrally with the container 10 may also be considered as attached. A container 10 capable of holding a biologic fluid for analysis is an acceptable example of a container 10, although other containers may be used alternatively with the identity tag 12. The identity tag 12 may be any type of tag that can be recognized and distinguished by an automated reader as will be described below. A preferred embodiment of the identity tag 12 is a trademark or service mark whose use can be controlled to avoid counterfeiting. Another embodiment of the identity tag 12 is one in which features or characters forming the identity tag 12 are encrypted. The identity tag 12 may or may not be visible to the naked human eye, although a visible identity tag 12 may be a helpful product discriminator. In fact, the identity tag 12 may be incorporated into other features of the container 10, including but not limited to, other machine-readable labels 14 attached to the container 10. In some instances, identity tags 12 of different origins may be acceptable.

Referring to FIG.2, the present method and apparatus for quality assurance for automated analyses of biologic matter further includes the provision of an automated analytical device 16 for use with the above described container 10 for holding biologic matter. A preferred analytical device 16 for use with the present invention container may include a reader module, a transport module, and a programmable analyzer. The reader module would include optics operable to analyze a field within an analysis chamber, and apparatus to access information through a label attached to the container 10. The transport module would include apparatus for moving the container 10 relative to the reader module, or vice versa. The programmable analyzer is programmed with instructions to coordinate the operation of the reader module and transport module according to a variety of analysis algorithms. The additional capability for authenticating an identity tag 12 may be in the form of an additional reader operating in coordination with the automated analytical device 16, that can recognize and distinguish an acceptable identity tag from one that is not. Alternatively, an existing reader within an analytical device 16 can be programmed to authenticate an identity tag 12.

In the operation of the present method and apparatus for quality control for automated analyses of biologic matter, a sample of biologic matter is placed within an analysis chamber of the container 10 and the container 10 is inserted within the automated analytical device 16. Prior to performing any analytical procedures, a reader within the analytical device 16 inspects the container 10 for an identity tag 12. If an identity tag 12 can be found on the container 10, the identity tag 12 is read or otherwise inspected by the reader 12. The analytical device 16 then positively or negatively authenticates the container 10 via the identity tag 12 using a comparative or other type algorithm. If the identity tag 12 cannot be found or is negatively authenticated, the operator is informed prior to the initiation of the analysis that the origin of the container 10 can not be authenticated and also may be informed of the potential consequences associated therewith. In some instances, it may be desirable to program the analytical device 16 to automatically reject a non-authentic container 10 to prevent the performance of an analysis. Conversely, a positive authentication of the identity tag 12 will prompt a notice to the operator that the container 10 is acceptable and/or the initiation of the analysis. In some instances, containers 10 from multiple acceptable sources (i.e., quality controlled sources such as licensees, etc.) may be used with a particular analytical device 16, in which case the analytical device 16 can be programmed to recognize different identity tags 12.

Although this invention has been shown and described with respect to the detailed embodiments thereof, it will be understood by those skilled in the art that various changes in form and detail thereof may be made without departing from the scope of the invention.

## Claims

1. An apparatus for analyzing a biologic sample, comprising:
a container (10) for holding said biologic sample;
a machine readable identity tag (12) attached to said container (10); and
an analytical device (16) for analyzing said biologic sample, said device (16) including means for authenticating said container (10) using said identity tag (12).

2. The apparatus of claim 1, wherein said identity tag (12) is a trademark.

3. The apparatus of claim 1 or 2, wherein said means for authenticating said container (10) using said identity tag (12), is a reader that optically reads said identity tag (12).

4. The apparatus of any one of claims 1 to 3, wherein said means for authenticating said container (10) provides information regarding the authenticity of said container (10).

5. A container (10) for holding a biologic sample for analysis for use with an automated analytical device (16), said container (10) comprising:
an analysis chamber for holding said biologic sample; and
a machine readable identity tag (12) attached to said container (10), wherein said identity tag (12) provides information regarding the origin of said container (10).

6. The container (10) of claim 5, wherein said machine-readable identity tag (12) is a trademark.

7. A container (10) for holding a biologic sample for analysis for use with an automated analytical device (16), said container (10) comprising:
an analysis chamber for holding said biologic sample; and
a machine-readable authenticating tag (12) attached to said container (10), wherein said authenticating tag (12) enables the manufacturer of said container (10) to be authenticated.

8. A container (10) for holding a biologic sample for analysis for use with an automated analytical device (16), said container (10) comprising:
an analysis chamber for holding said biologic sample; and
a machine readable quality control tag (12) attached to said container (10), wherein said quality control tag (12) identifies the manufacturer of said container (10).

9. A method for analyzing a biologic sample, comprising the steps of:
providing a container (10) for holding said biologic sample, said container (10) including a machine-readable identity tag (12);
providing an automated analytical device (16) for analyzing said biologic sample, said analytical device (16) including means for authenticating said identity tag (12);
authenticating said container (10) using said authenticating means and said identity tag (12); and
performing an action based on the authenticity of said container (10).

10. The method of claim 9, wherein said performed action includes providing a warning to an operator if said container (10) is not authentic.

11. The method of claim 9 or 10, wherein said performed action includes rejecting said container (10) if said container (10) is not authentic.
